# EUROPEAN PATENT SPECIFICATION

(11) **EP 1 965 662 B1**
(45) Date of publication and mention of the grant of the patent: **04.03.2015**
(21) Application number: 06829106.1
(22) Date of filing: 22.11.2006
(51) Int. Cl.: A23L 1/00, A23L 1/212, A23L 1/40, A23P 1/02, A23P 1/08

(54) **SOLID CONCENTRATE FOR BROTHS, BOUILLONS, SOUPS, SAUCES, (SIDE)DISHES, GARNISHING OR SEASONING AND PROCESS FOR PREPARING THE SAME**
FESTES KONZENTRAT FUER SUPPEN, FLEISCHBRUEHEN, SOSSEN, GARNIERUNGEN ODER GEWUERZE UND VERFAHREN ZUR HERSTELLUNG DESSELBEN
CONCENTRÉ SOLIDE POUR POTAGES, BOUILLONS, SOUPES, SAUCES, PLATS ET ACCOMPAGNEMENTS, GARNITURES OU ASSAISONNEMENTS ET PROCÉDÉS DE PRÉPARATION DUDIT CONCENTRÉ

(30) Priority: 12.12.2005 EP 05077840
(43) Date of publication of application: 10.09.2008
(73) Proprietor: Unilever N.V., 3013 AL Rotterdam (NL); Unilever PLC, London EC4Y 0DY (GB)
(72) Inventor: EPPLER, Wolfgang, Michael, 74074 Heilbronn (DE); MAHUT, Claude, Gérard, Jean-Bernard, 74074 Heilbronn (DE); MELWITZ, Dieter, Werner, 74074 Heilbronn (DE); MUELLER, Andrea, Silvia, 74074 Heilbronn (DE)
(74) Representative: Reijns, Tiemen Geert Pieter
(86) International application number: PCT/EP2006/011214
(87) International publication number: WO 2007/068332

(56) References cited:
- EP-A- 0 950 358
- EP-A- 1 269 864
- EP-A1- 1 491 101
- WO-A-02/069742
- DE-A1- 1 931 907
- US-A- 3 666 491
- US-A1- 2003 033 939
- "Biologically active supplement, fitoklimaksnye, useful e.g. to decrease risk of manifestation of climacteric syndrome, comprises dry concentrates of sage leaves, saffron flowers and marjoram herb infusions and bee mother milk" DERWENT, 27 June 2003 (2003-06-27), XP002370423
- "Biologically active supplement for treating functional diarrhea, intestine dyskinesia and light forms of abdominal discomfort, comprises e.g. Saint-John's-wort herb tincture dry concentrate, and ginger milled roots" DERWENT, 10 November 2004 (2004-11-10), XP002370424

## Description

### Field of the invention

The present invention relates to concentrates for broths, bouillons, soups, sauces, gravies, dishes, side dishes, for use as garnishing or seasoning and in particular to such concentrates containing dry herbs and/or vegetables, which concentrate is in the form of a solid body or assembly of bodies having a weight of 2-250 g, in particular a cube, block or tablet shape, which yield a broth, bouillon, soup, sauce etcetera upon dilution with (hot) water or an aqueous liquid, or which can be used as a (side)dish, seasoning or garnishing, and wherein the dry herbs and/or vegetables are present in-, or attached to-, or packaged with- the concentrate as one or more compressed particles or layers.

### Background of the invention

There exist a wide range of compositions which upon dilution with an aqueous liquid (usually water) can give a broth, bouillon, soup, sauce, gravy, dish, side dish, or which composition can be used as garnishing or seasoning on a (semi-)finished food. Commonly, such compositions are concentrates, in the sense that for normal use they are diluted with a (hot) aqueous liquid or are applied to a foodstuff. Examples are bouillon cubes or tablets which yield a broth, bouillon or soup upon mixing with water and applying heat, or tablets or cubes which can be used as a seasoning by adding the such tablet or cube to a dish, either as a whole or crumbled or broken.

Such compositions usually contain one or more of fat (including oil), thickeners (e.g. gums or starch-based like flour), salt, sugar(s), taste enhancers such as monosodium glutamate (MSG), spices, flavourings. Most of these ingredients are relatively small size particulates, e.g. not exceeding 1.5 or even 1 mm (e.g. salt, MSG, flour). The compositions can comprise furthermore herbs or pieces thereof, pieces of vegetables, fruit, or meat, croutons, etcetera.

The concentrates as referred to above can come in a variety of appearances, e.g. as liquid, pasty, or granular composition or as solid cube, tablet.

The present invention focuses on dry concentrates for broths, bouillons, soups, sauces, dishes, side dishes, use as garnishings or seasonings etectera. Notwithstanding the name "dry", they will contain a small amount of water (usually less than 20 wt %, preferable less than 12 wt%, more preferably less than 6 wt%). Such dry compositions are used both for single servings as well as for serving multiple portions.

It has certain advantages to have such concentrates as solid cubes, tablets, or other shape. Such solid cubes or tablets (which is herein to be understood to comprise all geometric shapes of articles can be obtained by compressing, casting or extruding part or all of the ingredients. Such cubes or tablets are convenient in terms of dosing, but they can have the disadvantage that relatively large (e.g. larger than 1 or 1.5 mm) (dry) herbs and vegetables or pieces thereof can only be included to a certain amount, in particular for leafy herbs and vegetables such is the case.

The problem that can occur when wishing to include more than a certain amount of such large (dry) herbs and/or vegetables or pieces thereof in e.g. a compressed cube or tablet, is in achieving a cube or tablet with sufficient coherence and rigidity: the cubes can crumble apart prematurely (i.e. before the concentrate is added to an aqueous liquid or added to a dish), ultimately into a heap of (clumps of) the powdery ingredients like salt, MSG, starch, sugar with mixed in it the larger leafy herbs and vegetables. For example, when a bouillon cube is pressed containing the usual ingredients (salt, MSG, sugar, flavourings, spices etcetera), but now added thereto e.g. 10% by weight of dry (e.g. freeze dried) leafy herbs and vegetables, the resulting cube shows an increased tendency to crumble apart prematurely (i.e. is less rigid). This is in particular the case with leafy herbs or vegetables such as parsley in pressed cubes. This premature disintegration is clearly undesired.

Hence, there is a need for a process for preparing (solid) concentrates, which concentrates can be used for preparing (e.g. upon dilution with an aqueous liquid) a broth, bouillon, soup, sauce, gravy, dish, side dish, or for use as garnishing or seasoning, which concentrates are or comprise (com)pressed, cast or extruded cubes, tablets and other "unit-dose" objects, and which concentrates comprise (preferably for at least 20%, more preferably at least 40% by weight, of total concentrate) as components one or more of salt, sugar, starch, flour, starch-derivatives, taste enhancers such as MSG, fat (including oil), creamer, which components all together are herein after referred to as "bulk ingredients", furthermore comprise (dry) herbs and/or vegetables or pieces thereof, in particular (dry) leafy herbs and/or vegetables or pieces thereof, and wherein such concentrates, in particular the part made up of the bulk ingredients, does not prematurely crumble apart (i.e. are not too brittle due to presence of pieces of herbs/vegetable pieces). A separation in several (e.g. 2-5) predetermined discrete and as such coherent parts is allowed (i.e. the concentrate does not need to be in the form of 1 cube or tablet, but is allowed to fall apart in (e.g. 1-3) part(s) of (pre-shaped and/or predetermined) bulk ingredients and (e.g. 1-3) part(s) of (pre-shaped and/or predetermined) of (dry) herbs and/or vegetables.

As such concentrates can have oil-soluble flavours, and as for some applications a creamy texture is preferred (e.g. creamy sauces or soups), it can be preferred that the compositions according to the invention contain some fat or oil and/or a creamer (for example like is disclosed in WO 2004/045298).

EP 888723 discloses culinary cubes with a core of salt, MSG, fat and which core is covered with particulates. The fat is a mixture of vegetable oil and hardened fat. The processing starts with making the core using standard techniques for hard bouillon cubes. Thereafter, the core is covered with a solution in water or a dispersion in fat of thickeners (e.g. starches, maltodextrins, gums), e.g. by immersion into such solution. Thereafter, the core is covered with particles (herbs, vegetable matter).

WO 01/72148 discloses culinary cubes with liquid or pasty filling with a covering material.

WO02/069742 discloses multi-ingredient stock cubes which comprise two parts which can be distinguished by vision or touch. One part can be e.g. small vegetable particles which show no or only weak coherence, i.e. a loose mass of vegetable particles.

EP 481923 discloses a process for compressing freeze dried vegetables.

US 5,895,675 discloses powdered food products optionally pressed into blocks using conventional presses. Such food products may be bouillon products, soups, sauces and thickeners. Such formulations may comprise crystals of sugar, salt, MSG, all milled to a size of less than 50µm, starches, meat and vegetable extract powders, herbs and spices.

EP 950358 disloses culinary cubes comprising 15-35% fat (e.g. hardened palm fat of a melting point of 41-46°C), 20-70% dehydrated base (e.g. starch, sugars, salt, MSG, thickeners, meat or vegetable extracts) and 8-50% visual elements (e.g. pieces of fruit, vegetables, seeds, meat, fish). Such cubes are prepared by melting the fat at temperatures of 50-70°C, mixing in the dehydrated base and subsequently the visual elements with the molten fat followed by forming a rolled-out product from the mixture obtained, cutting and cooling US-A- 2003/0033939 relates to a cooking aid composed of an envelope based on fat which is solid at room temperature and a fluid or pasty flavoring filling. The envelope of the product melts rapidly upon contact with hot food or in a frying pan and possesses good mechanical resistance to handling at room temperature. The envelope comprises of the order of 40-100% fat and up to 60% filling additives of polysaccharide, protein or fiber type or a mixture thereof. The aqueous and/or fatty filling of the product has a viscosity which is in the range between honey and a pasty spread.

RU-C-2207145 (XP0022370423) relates to a preparation of curative and prophylactic designation, useful as an agent for decrease in risk of manifestation of climacteric syndrome. Proposed is the biologically active supplement FitoKompleksnye. The supplement comprises dry concentrates of sage leaves, saffron flowers, and marjoram herb infusions, bee mother milk, ginger roots, tocopherol acetate (vitamin E), zinc sulphate, calcium gluconate, starch, sugar, calcium stearate and talc taken in a definite ratio of components per tablet with mass 0.55 g.

RU-C-223944 7 (XP002370424) relates to a preparation used as an accessory agent in treatment of functional diarrhea, intestine dyskinesia and light forms of abdominal discomfort. The preparation comprises Saint-Johns's-wort herb tincture dry concentrate, pomegranate fruit decoction dry concentrate, rosewort (snowden rose) extract dry concentrate, ginger milled roots, milled rice, starch, calcium stearate and sugar taken in the definite ratio of components. The preparation is prepared as a tablet with mass 0.55 g.

DE-A-1931907 relates to a soup concentrate in solid form, which provides a ready-to-eat consumable soup when mixed with water, wherein the soup concentrate consists of precooked, dehydrated vegetables and pre-cooked dehydrated meat as well as one or more edible hydrocolloides.

US-A-3666491 relates to a crouton which has an adhering layer of a dry soup base and is suitable for the instant preparation of soup by the addition of the croutons to hot water. The dry soup base layer may be applied to the crouton, for example, by coating the crouton with a bonding agent and then contacting the crouton with powdered dry soup base. The soup base layer may alternatively be applied by other methods such as eo-extrusion of the crouton and soup base.

US 3385715 discloses compaction of freeze dried vegetables by compression at a moisture content 5-15%, followed by drying to 3% moisture.

EP 326525 discloses a process in which vegetables are freeze dried, rehydrated to 20% moisture, compressed and dried to 3% moisture, whereby the aim is reduction of weight and volume with a taste (when rehydrated) comparable to the fresh product.

WO 00/04786 discloses a process for preparing dehydrated vegetables that have improved (rapid rehydrating), quick cooking behaviour. This is achieved by compression of a partially dehydrated vegetable product.

DE 1043052 discloses concentrates for preparing soups, which concentrates are composed of one layer of water-soluble or meltable components made first, said layer is then contacted with dry herb and vegetable particles, optionally compressed, after which the herb/vegetable side of the article is covered with a melted fat.

EP 1491101 discloses marbled bouillon and seasoning cubes, and a process to prepare such. The process requires at least one fraction to be granulated, and mixed with a second fraction having a different colour, and then pressed to a cube. The recipes do include herbs or vegetables or particles thereof, in amounts of less than 0.9% by weight based on the total cube.

EP 1269864 discloses a process for preparing a hard bouillon tablet which comprises little or no fat but does contain oil. For achieving this, part of the ingredients is finely milled. Herb leafs optionally may be present. If such are present, they are present in low amounts (2% or less).

### Summary of the invention

It has now been found that the objective as formulated above may be achieved (at least in part) by a process which relies on one principle, but which can be executed in three different ways.

Hence, the invention relates to a process for preparing a food concentrate, the concentrate comprising:
- 20-98% (preferably 40-95%, weight % on total concentrate) bulk ingredients comprising one or more of salt, taste enhancers, sugar(s), fat, oil, gums, thickeners, creamers, spices, starch, starch-derivatives, flour, maltodextrin, ground herbs, ground vegetables, ground legumes, meat extracts, vegetable extracts,
- 2-80% (preferably 5-60%, weight % on total concentrate) of herb and/or vegetable pieces, which process comprises the steps of either:
   (a) pressing said herb and/or vegetable pieces (preferably 0.5-100 g of it) having a moisture content of 5-30% wt to one or more compressed particles or layers,
   (b) forming 2-250 g (preferably 3-50 g) of a mixture of the bulk ingredients with 1-20 of the compressed particles or layers as obtained under (a) to a solid, shaped concentrate (article);
   or
   (a) pressing said herb and/or vegetable pieces (preferably 0.5-100 g of it) having a moisture content of 5-30% wt to one or more compressed particles or layers,
   (b) forming 2-250 g (preferably 3-50 g) of a mixture of the bulk ingredients to a particle or layer,
   (c) jointly packaging 1-10 of the compressed particles or layers as obtained under (a) with 1-10 particles or layers as obtained under (b);
   or
   (a) pressing said herb and/or vegetable pieces (preferably 0.5-100 g of it) having a moisture content of 5-30% wt to one or more compressed particles or layers,
   (b) forming 2-250 g (preferably 3-50 g) of a mixture of the bulk ingredients to a particle or layer,
   (c) adhering 1-10 of the compressed particles or layers as obtained under (a) to 1-10 particles or layers as obtained under (b), to obtain a solid concentrate (article).

In the above, the forming under (b) can be e.g. by pressing, casting or extruding. Pressing and extruding are preferred forming techniques in this connection, with pressing being most preferred.

It was found that of the concentrates (e.g. pressed, extruded or cast tablets, cubes, blocks, pellets, etcetera) as obtained above the bulk ingredients part could be manufactured such that it did not prematurely fall apart. The first processing option to carry out the invention may give a cube, tablet, etcetera which as a whole, including the herbs/vegetable particles does not fall apart prematurely. The compressed herbs/vegetable part may be visible from the outside (e.g. as a layer or sheet on one side of a cube) or may be hidden inside the compressed bulk ingredients part (e.g. a pellet inside the cube of bulk material). The second processing option to carry out the invention may give a product which, whilst in the packaging (e.g. a wrapper) may seem like one solid article, but on opening may fall apart in one or more separate parts comprising the bulk ingredients and one or more separate parts of compressed herbs/vegetables. The third processing option to carry out the invention may yield a cube, tablet or other shape that comprises one or more parts of the bulk ingredients and one or more parts of compressed herbs/vegetables attached to it. Depending on the adhereing technique chosen (e.g. glueing with water or an aqueous thickener solution or other) the parts may or may not be separatable by hand. Depending on the desired end result, a process option among the above may be chosen.

The invention further provides a food concentrate obtainable by the process according to the invention, wherein the concentrate is suitable for preparing broths, bouillons, soups, sauces, dishes, side dishes, for use as garnishing or seasoning, the concentrate being a solid article, comprising two parts (a) and (b), wherein part (a) comprises 20-98% (preferably 40-95%, weight % on total concentrate) bulk ingredients comprising one or more of salt, taste enhancers, sugar(s), fat, oil, gums, thickeners, creamers, spices, starch, starch-derivatives, flour, maltodextrin, ground herbs, ground vegetables, ground legumes, meat extracts, vegetable extracts, and wherein part (b) comprises 2-80% (preferably 5-60%, weight % ontotal concentrate) of compressed, bound herbs and/or vegetables, and wherein the compressed herbs and/or vegetables are in the form of a compressed particle, and wherein the herb and/or vegetable pieces have a moisture content of below 15 % wt, and wherein 60-100% by weight of the herbs, vegetables or pieces thereof is in the form of leafy herbs, vegetables or pieces thereof, wherein the herbs, vegetables or pieces thereof are present as firmly bound (and not as loose or loosely bound herb/vegetable matter) pills, pellets, briquettes, tablets, layers, sheets, cubes or other format, and then combined with the bulk ingredients.

In the processes and products as referred to above, the compressed herb/vegetable particle or layer (of which e.g. 1-10, preferably 1-5, can be used in the article with the remaining (e.g. bulk-) ingredients) can be in a variety of shape, e.g. those which are easily produced by compression, such as pills, pellets, briquettes, tablets, layers, and sheets. In case of layers or sheets, the size and shape may be such that it is e.g. a complete layer (or layers, sheet or sheets) of the final article: e.g. a lower layer or sheet of compressed herbs/vegetables according to the invention, with on it and attached thereto the remaining (e.g. bulk-) ingredients of the article. Or e.g. as a middle layer or sheet with the remaining (e.g. bulk-) ingredients on top and bottom. For appearance, the part (b) preferably has smooth sides.

The part of the bouillon, seasoning etcetera cubes and tablets according to the present invention which comprises the herbs, vegetables or pieces thereof may contain other components next to herbs, vegetables or pieces thereof but preferably comprises 60-100%, more preferably 80-100%, even more preferably 90-100%, most preferably substantially 100% (weight % dry weight based on the part that is compressed under step (a) in the above processes, i.e. excluding moisture) of herbs, vegetables, or pieces thereof.

### Detailed description of the invention

In the processes above, the herb and/or vegetable pieces could be pressed with minimal damage as long as the compressing (of the herbs and/or vegetables) is done on herbs and/or vegetables having a moisture content of 5-30%. By having such moisture content, the volume is sufficiently reduced to allow compressing, and the amount of moisture is still enough to give some flexibility to the herbs and/or vegetables to allow compressing. It is preferred to carry out the pressing of the herb and/or vegetable particles having a moisture content of 7-20% wt, more preferably 10-15% wt.

It was found that the in the process and article according to the invention it is particularly beneficial if freeze dried herbs and/or vegetables are used, but also other drying techniques may be employed, or mixed drying techniques. It is possible to use already (freeze) dried herbs and/or vegetables, which will usually have a moisture content of less than 5%, e.g. 2% or less. In such case, the herb and/or vegetable pieces will first be rehydrated to a moisture content of 5-30% (preferably 7-20% wt, more preferably 10-15% wt) prior to compression step (a). Or, if one starts from fresh herbs and/or vegetables they can be (freeze) dried prior to step (a) to a moisture content of below 5% and then rehydrated to a moisture content of 5-30% (preferably 7-20% wt, more preferably 10-15% wt) and then compressed. Alternatively, instead of drying to a moisture content of below 5% and rehydration, it may be preferred to dry (preferably freeze dry) to a moisture content of 5-30% (preferably 7-20% wt, more preferably 10-15% wt) prior to step (a). In such process no rehydration is needed prior to step (a) and the herbs and/or vegetables can be compressed directly.

The compression of the herbs and/or vegetables can be done with equipment as is known in the art, e.g. as has been described in US 3385715 and EP 326525. The compressed herbs and/or vegetables may be in any suitable shape, that is any shape that can conveniently be pressed, and the resulting compressed particle should be such that it can be used in the next step: pressing with the bulk ingredients to a shaped article. Preferred shapes may be pills, pellets, briquettes, tablets, layers, sheets, and cubes. For preventing premature crumbling of the seasoning-, bouillon-, or other cubes or tablets according to the present invention it is preferred that the herbs, vegetables or pieces thereof are present as firmly bound (and not as loose or loosely bound herb/vegetable matter) pills, pellets, briquettes, tablets, layers, sheets, cubes or other format, and then combined with the bulk ingredients. The processing of the present invention enables such. After the compression of the herbs and/or vegetables having a moisture content of 5-30% (preferably 7-20% wt, more preferably 10-15% wt), the compressed particles or layers etcetera can be dried to a moisture content of below 15% wt, more preferably below 5% wt. It is preferred that the compressed herbs and/or vegetables have an aw of less than 0.75.

It was found that in the process and article according to the invention the usual herbs and/or vegetables or parts thereof can be used such as such as parsley, dill, basil, chives, sage, rosemary, thyme, oregano, leek, onion, mushrooms, broccoli (incl. florets), cauliflower (incl. florets), tomato, courgette, asparagus, (bell) pepper, egg plant, cucumber, carrot, coconut flesh. These herbs and/or vegetables may be in leafs, slices, florets, dices or other pieces, depending upon its nature and the desired appearance. The processes according to the present invention are in particular suitable for including leafy herbs, vegetables, or pieces thereof in bouillon-, seasoning- and other concentrates in cube, tablet or other solid form. Therefore, it is preferred that 60-100% (preferably 80-100%, more preferably 90-100%) by weight of the herbs, vegetables or pieces thereof is in the form of leafy herbs, vegetables or pieces thereof. It may be preferred that part or all of such herbs and/or vegetables are freeze dried. Also present may be e.g. croutons, cheese, dried pieces of meat or fish.

In the processes according to the invention, the bulk ingredients will usually contain the ingredients which provide the basis or structure and/or part of the taste of the broth, bouillon, soup, sauce, (side)dish, seasoning etcetera when mixed (and optionally heated) with water or another aqueous liquid or applied to a dish, in which the herbs and/or vegetables are desired. These components are usually present in the final soup, sauce, (side)dish, etcetera in dissolved (salt, MSG, sugars) or melted (fat and oil) state, next to (powdery) material like spices or finely ground (dried) vegetable powder, starch, flour, maltodextrin, powdered flavourings, gums, thickeners, creamers, or mixtures thereof, which can e.g. be present in the final food composition as finely dispersed or gelated matter. The bulk ingredients preferably comprises one or more of salt, MSG, sugar, spices, flour, starch, maltodextrin, flavourings, or mixtures thereof. Furthermore, the following components may be present: gums, native starch, modified starch, cereal flour, milled dehydrated vegetables/legumes, creamers or mixtures thereof. The amount of starch and/or flour in the filling material is preferably 0-40% wt, preferably 0.1-20% wt based on the total particle. It may be preferred that at least 80% wt of the dry not-fat bulk ingredients (e.g. salt, MSG, flour, sugars, etcetera) as used in this invention has a particle size of smaller than 1 mm (preferably smaller than 500 micron), preferably measured using a sieve with a mesh size of 1 mm. The fat and/or oil may comprise vegetable fat (e.g. sunflower or olive oil) and/or plant sterols or esters thereof and/or plant stanols or esters thereof.

Preferably, in all three embodiments of the present invention, the fraction of bulk ingredients comprises 40-100% (wt %, based on total amount of bulk fraction or bulk ingredients; more preferably 60-100%, even more preferablt 70-100%, most preferably 70-90%) of salt, taste enhancers, sugar(s), fat, oil, gums, thickeners, creamers, spices, starch, starch-derivatives, flour, maltodextrin, ground herbs, ground vegetables, ground legumes, meat extracts, vegetable extracts,

A creamer may be included e.g. for creamy soups or sauces, gravies, etcetera. Suitable creamers are known in the art of dry creamy soups and sauces. Such compositions are usually combinations of fat with carbohydrate and/or protein, as e.g. disclosed in WO 2004/045298.

The present invention relates to products which are preserved by a reduced water content. Preferably the water activity of the products according to the invention is below 0.75, more preferably below 0.6. It is preferred that the shaped articles according to the invention have a moisture content of less than 15%, e.g. 1-15%, preferably less than 10% wt.

The pressing or other forming (of both herbs/vegetables as well as the bulk ingredients or these two jointly) can be done using equipment as known in the art for pressing or forming (food) products from granular material, e.g. bouillon cubes. Such forming may be done using roller compacting, extruding, sheeting, casting, pelletising, (com)pressing, etcetera.

The cubes may be used in soup vending machines, in which one or several cubes can be dosed for one serving.

### EXAMPLE

Asparagus cream soup with "pill" of dry vegetables and herbs.

An asparagus cream soup dry concentrate was prepared of the following ingredients (balance is moisture):

| Component | Amount (g) | Wt % |
|---|---|---|
| Bell pepper particles, freeze dried | 0.4 | 2.2 |
| Courgette particles, 6x6x6 mm, freeze dried | 0.4 | 2.2 |
| Cauliflower florets, freeze dried | 0.4 | 2.2 |
| Broccoli florets, 12 mm, freeze dried | 0.4 | 2.2 |
| Potato starch | 3.93 | 21.8 |
| Creamer | 3.54 | 19.7 |
| Palm oil | 3.50 | 19.4 |
| Roux (of which 28% fat) | 1.12 | 6.2 |
| Salt | 0.71 | 3.9 |
| MSG | 0.56 | 3.1 |
| Leek powder | 0.56 | 3.1 |
| Basil powder | 0.45 | 2.4 |
| Sugar | 0.23 | 1.3 |
| Flavours and aroma's | 0.98 | 5.4 |

The processing involved first pressing a "pill" of the dry bell peppers, courgette particles and cauliflower and broccoli florets by re-hydrating to about 15% moisture and subsequent compressing to form a pill, which was then dried again to about 6% moisture. The size of the "pill" was approx. 1.5 cm diameter, thickness approx. 1 cm.

All other ingredients were mixed together to form the matrix material. The pill and the matrix material were put into a press and compressed to a block. The resulting product was a rigid, non-friable block in cylinder shape (diameter 4 cm, thickness 2 cm) with the pill inside, partially visible from the outside. Upon mixing with 175 ml hot water and stirring the block fell apart quickly to form a soup, and the pill fell apart in about 3 minutes in loose vegetables which returned into their shape prior to freeze drying.

## Claims

1. Process for preparing a food concentrate, the concentrate comprising:
- 20-98% (preferably 40-95%, weight % on total concentrate) bulk ingredients comprising one or more of salt, taste enhancers, sugar(s), fat, oil, gums, thickeners, creamers, spices, starch, starch-derivatives, flour, maltodextrin, ground herbs, ground vegetables, ground legumes, meat extracts, vegetable extracts,
- 2-80% (preferably 5-60%, weight % on total concentrate) of herb and/or vegetable pieces,
which process comprises the steps of either:
(a) pressing said herb and/or vegetable pieces (preferably 0.5-100 g of it) having a moisture content of 5-30% wt to one or more compressed particles or layers,
(b) forming 2-250 g (preferably 3-50 g) of a mixture of the bulk ingredients with 1-20 of the compressed particles or layers as obtained under (a) to a solid, shaped article;
**or**
(a) pressing said herb and/or vegetable pieces (preferably 0.5-100 g of it) having a moisture content of 5-30% wt to one or more compressed particles or layers,
(b) forming 2-250 g (preferably 3-50 g) of a mixture of the bulk ingredients to a particle or layer,
(c) jointly packaging 1-10 of the compressed particles or layers as obtained under (a) with 1-10 particles or layers as obtained under (b);
or
(a) pressing said herb and/or vegetable pieces (preferably 0.5-100 g of it) having a moisture content of 5-30% wt to one or more compressed particles or layers,
(b) forming 2-250 g (preferably 3-50 g) of a mixture of the bulk ingredients to a particle or layer,
(c) adhering 1-10 of the compressed particles or layers as obtained under (a) to 1-10 particles or layers as obtained under (b).

2. Process according to claim 1, **characterised by** drying the herb and/or vegetable pieces prior to step (a) to a moisture content of 5-30%.

3. Process according to claim 1, **characterised by** drying the herb and/or vegetable pieces prior to step (a) to a moisture content of below 5% and then rehydrating to a moisture content of 5-30%.

4. Process according to claim 1-3, wherein the compressed particles or layers obtained after (a) are dried to a moisture content of below 15%, preferably below 5%.

5. Process according to claim 1-4, wherein the pieces as compressed under (a) are compressed to one or more sheets, layers, pills, pellets, briquettes, tablets or cubes.

6. Food concentrate obtainable by the process according to anyone of claims 1 to 5, wherein the concentrate is suitable for preparing broths, bouillons, soups, sauces, dishes, side dishes, for use as garnishing or seasoning, the concentrate being a solid article, comprising two parts (a) and (b), wherein part (a) comprises 20-98% (preferably 40-95%, weight % on total concentrate) bulk ingredients comprising one or more of salt, taste enhancers, sugar(s), fat, oil, gums, thickeners, creamers, spices, starch, starch-derivatives, flour, maltodextrin, ground herbs, ground vegetables, ground legumes, meat extracts, vegetable extracts, and wherein part (b) comprises 2-80% (preferably 5-60%, weight % on total concentrate) of compressed, bound herbs and/or vegetables, and wherein the compressed herbs and/or vegetables are in the form of a compressed particle, and wherein the herb and/or vegetable pieces have a moisture content of below 15 % wt, and wherein 60-100% by weight of the herbs, vegetables or pieces thereof is in the form of leafy herbs, vegetables or pieces thereof, wherein the herbs, vegetables or pieces thereof are present as firmly bound (and not as loose or loosely bound herb/vegetable matter) pills, pellets, briquettes, tablets, layers, sheets, cubes or other format, and then combined with the bulk ingredients.

7. Concentrate according to claim 6, wherein the herb and/or vegetable pieces have a moisture content of below 5%.

8. Concentrate according to claim 6-7, wherein 80% wt of the dry not-fat bulk ingredients has a particle size of smaller than 1 mm (preferably smaller than 500 micron).

9. Concentrate according to claim 6-8, having an overall water activity below 0.75, preferably below 0.6.

## Patentansprüche

1. Verfahren zum Herstellen eines Lebensmittelkonzentrats,
wobei das Konzentrat Folgendes aufweist:
- 20 bis 98 % (vorzugsweise 40 bis 95 %, auf das gesamte Konzentrat bezogene Gew.-%) Massebestandteile, die eines oder mehrere aus Salz, Geschmacksverstärkern, Zucker(n), Fett, Öl, Gummis, Verdickungsmitteln, Molkereiprodukten, Gewürzen, Stärke, Stärkederivaten, Mehl, Maltodextrin, gemahlenen Kräutern, gemahlenen Pflanzen, gemahlenen Hülsenfrüchten, Fleischextrakten, Pflanzenextrakten aufweisen,
- 2 bis 80 % (vorzugsweise 5 bis 60 %, auf das gesamte Konzentrat bezogene Gew.-%) Kräuter- und/oder Pflanzenstücke,
wobei das Verfahren die folgenden Schritte aufweist:
entweder:
(a) Pressen der Kräuter- und/oder Pflanzenstücke (vorzugsweise 0,5 bis 100 g davon) mit einem Feuchtigkeitsgehalt von 5 bis 30 Gew.-% zu einem oder mehreren gepressten Teilchen oder einer oder mehreren gepressten Schichten,
(b) Formen von 2 bis 250 g (vorzugsweise 3 bis 50 g) eines Gemischs der Massebestandteile mit 1 bis 20 der gepressten Teilchen oder Schichten, wie sie unter (a) erhalten wurden, zu einem festen Formgegenstand;
oder
(a) Pressen der Kräuter- und/oder Pflanzenstücke (vorzugsweise 0,5 bis 100 g davon) mit einem Feuchtigkeitsgehalt von 5 bis 30 Gew.-% zu einem oder mehreren gepressten Teilchen oder einer oder mehreren gepressten Schichten,
(b) Formen von 2 bis 250 g (vorzugsweise 3 bis 50 g) eines Gemischs der Massebestandteile zu einem Teilchen oder einer Schicht,
(c) gemeinsames Verpacken von 1 bis 10 der gepressten Teilchen oder Schichten, wie sie unter (a) erhalten wurden, mit 1 bis 10 Teilchen oder Schichten, wie sie unter (b) erhalten wurden;
oder
(a) Pressen der Kräuter- und/oder Pflanzenstücke (vorzugsweise 0,5 bis 100 g davon) mit einem Feuchtigkeitsgehalt von 5 bis 30 Gew.-% zu einem oder mehreren gepressten Teilchen oder einer oder mehreren gepressten Schichten,
(b) Formen von 2 bis 250 g (vorzugsweise 3 bis 50 g) eines Gemischs der Massebestandteile zu einem Teilchen oder einer Schicht,
(c) Anheften von 1 bis 10 der gepressten Teilchen oder Schichten, wie sie unter (a) erhalten wurden, an 1 bis 10 Teilchen oder Schichten, wie sie unter (b) erhalten wurden.

2. Verfahren nach Anspruch 1,
**gekennzeichnet durch** das Trocken der Kräuter- und/oder Pflanzenstücke vor dem Schritt (a) bis zu einem Feuchtigkeitsgehalt von 5 bis 30 %.

3. Verfahren nach Anspruch 1,
**gekennzeichnet durch** das Trocknen der Kräuter- und/oder Pflanzenstücke vor dem Schritt (a) bis zu einem Feuchtigkeitsgehalt von weniger als 5 % und anschließendes Wiederbefeuchten bis zu einem Feuchtigkeitsgrad von 5 bis 30 %.

4. Verfahren nach den Ansprüchen 1 bis 3,
wobei die nach dem Schritt (a) erhaltenen gepressten Teilchen oder Schichten bis zu einem Feuchtigkeitsgehalt von weniger als 15 %, vorzugsweise weniger als 5 % getrocknet werden.

5. Verfahren nach den Ansprüchen 1 bis 4,
wobei die Stücke, wie sie unter (a) gepresst wurden, zu einer oder mehreren Lagen, Schichten, Pillen, Pellets, Pressstücken, Tabletten oder Würfeln gepresst werden.

6. Lebensmittelkonzentrat, das nach dem Verfahren nach einem der Ansprüche 1 bis 5 erhalten werden kann,
wobei das Konzentrat für die Herstellung von Brühen, Bouillons, Suppen, Soßen, Gerichten, Beilagen, für die Verwendung als Garnierung oder Würze geeignet ist, wobei das Konzentrat ein fester Gegenstand ist, der zwei Teile (a) und (b) aufweist, wobei der Teil (a) 20 bis 98 % (vorzugsweise 40 bis 95 %, auf das gesamte Konzentrat bezogene Gew.-%) Massebestandteile aufweist, die eines oder mehrere aus Salz, Geschmacksverstärkern, Zucker(n), Fett, Öl, Gummis, Verdickungsmitteln, Molkereiprodukten, Gewürzen, Stärke, Stärkederivaten, Mehl, Maltodextrin, gemahlenen Kräutern, gemahlenen Pflanzen, gemahlenen Hülsenfrüchten, Fleischextrakten, Pflanzenextrakten aufweisen, und wobei der Teil (b) 2 bis 80 % (vorzugsweise 5 bis 60 %, auf das gesamte Konzentrat bezogene Gew.-%) gepresste, gebundene Kräuter und/oder Pflanzen aufweist, und wobei die gepressten Kräuter und/oder Pflanzen in Form eines gepressten Teilchens vorliegen, und wobei die Kräuter- und/oder Pflanzenstücke einen Feuchtigkeitsgehalt von weniger als 15 Gew.-% haben und wobei 60 bis 100 Gew.-% der Kräuter, Pflanzen oder Stücke davon in Form von blattartigen Kräutern, Pflanzen oder Stücken davon vorliegen, wobei die Kräuter, Pflanzen oder Stücke davon als fest gebundene (und nicht als lockeres oder locker gebundenes Kräuter/Pflanzen-Material) Pillen, Pellets, Pressstücke, Tabletten, Schichten, Lagen, Würfeln oder anderes Format vorliegen und dann mit den Massebestandteilen kombiniert werden.

7. Konzentrat nach Anspruch 6,
wobei die Kräuter- und/oder Pflanzenstücke einen Feuchtigkeitsgehalt von weniger als 5 % haben.

8. Konzentrat nach den Ansprüchen 6 und 7,
wobei 80 Gew.-% der trockenen, fettfreien Massebestandteile eine Teilchengröße von weniger als 1 mm (vorzugsweise weniger als 500 µm) aufweisen.

9. Konzentrat nach den Ansprüchen 6 bis 8,
das eine gesamte Wasseraktivität von weniger als 0,75, vorzugsweise von weniger als 0,6 aufweist.

## Revendications

1. Procédé de préparation d'un concentré alimentaire, le concentré comprenant :
- 20-98 % (de préférence 40-95 %, % en masse par rapport au concentré total) d'ingrédients en vrac comprenant un ou plusieurs parmi le sel, des exhausteurs de goût, du(des) sucre(s), de la graisse, de l'huile, des gommes, des épaississants, des succédanés de crème, des épices, de l'amidon, des dérivés d'amidon, de la farine, de la maltodextrine, des herbes broyées, des végétaux broyés, des légumes broyés, des extraits de viande, des extraits de végétaux,
- 2-80 % (de préférence 5-60 %, % en masse par rapport au concentré total) de morceaux d'herbes et/ou de végétaux,
lequel procédé comprend les étapes soit :
(a) de compression desdits morceaux d'herbes et/ou de végétaux (de préférence 0,5-100 g de ceux-ci) présentant une teneur en humidité de 5-30 % en poids en une ou plusieurs particules ou couches comprimées,
(b) de façonnage de 2-250 g (de préférence 3-50 g) d'un mélange des ingrédients en vrac avec 1-20 des particules ou couches comprimées comme obtenues sous (a) en un article façonné, solide ;
soit
(a) de compression desdits morceaux d'herbes et/ou de végétaux (de préférence 0,5-100 g de ceux-ci) présentant une teneur en humidité de 5-30 % en poids en une ou plusieurs particules ou couches comprimées,
(b) de façonnage de 2-250 g (de préférence 3-50 g) d'un mélange des ingrédients en vrac en une particule ou couche,
(c) d'emballage commun de 1-10 des particules ou couches comprimées comme obtenues sous (a) avec 1-10 particules ou couches comme obtenues sous (b) ;
soit
(a) de compression desdits morceaux d'herbes et/ou de végétaux (de préférence 0,5-100 g de ceux-ci) présentant une teneur en humidité de 5-30 % en poids en une ou plusieurs particules ou couches comprimées,
(b) de façonnage de 2-250 g (de préférence 3-50 g) d'un mélange des ingrédients en vrac en une particule ou couche,
(c) d'adhérence de 1-10 des particules ou couches comprimées comme obtenues sous (a) à 1-10 particules ou couches comme obtenues sous (b).

2. Procédé selon la revendication 1, **caractérisé par** un séchage des morceaux d'herbes et/ou de végétaux avant l'étape (a) jusqu'à une teneur en humidité de 5-30 %.

3. Procédé selon la revendication 1, **caractérisé par** un séchage des morceaux d'herbes et/ou de végétaux avant l'étape (a) jusqu'à une teneur en humidité inférieure à 5 % et réhydratation subséquente jusqu'à une teneur en humidité de 5-30 %.

4. Procédé selon les revendications 1-3, dans lequel les particules ou couches comprimées obtenues sous (a) sont séchées jusqu'à une teneur en humidité inférieure à 15 %, de préférence inférieure à 5 %.

5. Procédé selon les revendications 1-4, dans lequel les morceaux comme comprimés sous (a) sont comprimés en une ou plusieurs feuilles, couches, pilules, boulettes, briquettes, tablettes ou cubes.

6. Concentré alimentaire pouvant être obtenu par le procédé selon l'une quelconque des revendications 1 à 5, dans lequel le concentré est approprié pour préparer des potages, des bouillons, des soupes, des sauces, des plats, des plats d'accompagnement, pour une utilisation comme garnitures ou assaisonnements, le concentré étant un article solide, comprenant deux parties (a) et (b), dans lequel la partie (a) comprend 20-98 % (de préférence 40-95 %, % en masse par rapport au concentré total) d'ingrédients en vrac comprenant un ou plusieurs parmi le sel, des exhausteurs de goût, du(des) sucre(s), de la graisse, de l'huile, des gommes, des épaississants, des succédanés de crème, des épices, de l'amidon, des dérivés d'amidon, de la farine, de la maltodextrine, des herbes broyées, des végétaux broyés, des légumes broyés, des extraits de viande, des extraits de végétaux, et dans lequel la partie (b) comprend 2-80 % (de préférence 5-60 %, % en masse par rapport au concentré total) d'herbes et/ou de végétaux comprimés, liés, et dans lequel les herbes et/ou les végétaux comprimés sont dans la forme d'une particule comprimée, et dans lequel les morceaux d'herbes et/ou de végétaux présentent une teneur en humidité inférieure à 15 % en masse, et dans lequel 60-100 % en masse des herbes, végétaux ou morceaux de ceux-ci sont dans la forme d'herbes, de végétaux en feuilles ou de morceaux de ceux-ci, dans lequel les herbes, les végétaux ou les morceaux de ceux-ci sont présents comme des pilules, des boulettes, des briquettes, des tablettes, des couches, des feuilles, des cubes ou d'autres formats fermement liés (et non pas comme matière d'herbes/de végétaux lâche ou liée de manière lâche), et sont ensuite combinés avec les ingrédients en vrac.

7. Concentré selon la revendication 6, dans lequel les morceaux d'herbes et/ou de végétaux présentent une teneur en humidité inférieure à5%.

8. Concentré selon les revendications 6-7, dans lequel 80 % en masse des ingrédients en vrac de non-graisse secs présentent une taille de particules inférieure à 1 mm (de préférence inférieure à 500 microns).

9. Concentré selon les revendications 6-8, présentant une activité d'eau globale inférieure à 0,75, de préférence inférieure à 0,6.
